# EUROPEAN PATENT APPLICATION

(11) **EP 4 704 465 A1**
(43) Date of publication of application: **04.03.2026**
(21) Application number: 23934398.1
(22) Date of filing: 24.04.2023
(51) Int. Cl.: H04W 36/08

(54) **U-APSD NEGOTIATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/090405
(87) International publication number: WO 2024/221193

(57) **Abstract**

Embodiments of the present disclosure relate to the technical field of mobile communications, and provide an unscheduled automatic power save delivery (U-APSD) negotiation method, an electronic device, and a storage medium. The U-APSD negotiation method is applied to an access point (AP). The method comprises: determining a first radio frame, wherein the first radio frame comprises first identification information, the first identification information identifying that after a STA is switched from a first AP to a second AP, a U-APSD parameter negotiated with the first AP is used on a target connectivity after the handover; and sending the first radio frame. The embodiments of the present disclosure provide a U-APSD negotiation mechanism.

## Description

### TECHNICAL FIELD

Embodiments of the present disclosure relate to the technical field of mobile communications, and in particular, to a method for U-APSD negotiation, an electronic device, and a storage medium.

### BACKGROUND

At present, the content studied by Wi-Fi technology, for example, Ultra High Reliability (UHR), is designed to improve the reliability of Wireless Local Area Networks (WLAN) link, reduce latency, improve the manageability, increase throughput at different signal to noise ratio (SNR) levels, and reduce device-level power consumption, etc.

In UHR, the low-latency service transmission mechanism will be further enhanced, and multi-link scenarios may be supported. In order to ensure transmission of a low-latency service, a station (STA) may be handed over between a plurality of access points (APs). Therefore, a U-APSD negotiation mechanism needs to be provided, so that after the STA is handed over between the plurality of APs, the power saving mechanism integrity of the STA is guaranteed.

### SUMMARY

Embodiments of the present disclosure provide a method for U-APSD negotiation, an electronic device, and a storage medium, to provide a U-APSD negotiation mechanism.

In an aspect, embodiments of the present disclosure provide a method for U-APSD negotiation, applied to a station (STA). The method includes:
determining a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
sending the first wireless frame.

In another aspect, embodiments of the present disclosure further provide a method for U-APSD negotiation, applied to a first access point (AP). The method includes:
receiving a first wireless frame, where the first wireless frame includes first identification information, and the first identification information identifies that after a station (STA) is handed over from the first access point (AP) to a second AP, an unscheduled automatic power save delivery (U-APSD) parameter negotiated with the first AP is used on a target link after handover.

In another aspect, embodiments of the present disclosure further provide a method for U-APSD negotiation, applied to a second access point (AP). The method includes:
receiving a third wireless frame, where the third wireless frame includes second identification information, and the second identification information identifies that after a station (STA) is handed over from a first AP to the second AP, an unscheduled automatic power save delivery (U-APSD) parameter negotiated with the first AP is used on a target link after handover.

In another aspect, embodiments of the present disclosure further provide an electronic device, where the electronic device is a station (STA), and the electronic device includes:
a determination module, configured to determine a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
a sending module, configured to send the first wireless frame.

In another aspect, embodiments of the present disclosure further provide an electronic device, where the electronic device is a first access point (AP), and the electronic device includes:
a receiving module, configured to receive a first wireless frame, where the first wireless frame includes first identification information, and the first identification information identifies that after a station (STA) is handed over from the first access point (AP) to a second AP, an unscheduled automatic power save delivery (U-APSD) parameter negotiated with the first AP is used on a target link after handover.

In another aspect, embodiments of the present disclosure further provide an electronic device, where the electronic device is a second access point (AP), and the electronic device includes:
a receiving module, configured to receive a third wireless frame, where the third wireless frame includes second identification information, and the second identification information identifies that after a station (STA) is handed over from a first AP to the second AP, an unscheduled automatic power save delivery (U-APSD) parameter negotiated with the first AP is used on a target link after handover.

Embodiments of the present disclosure further provide an electronic device, including a memory, a processor, and a computer program stored in the memory and executable on the processor, where when the processor executes the program, the method according to one or more of the embodiments of the present disclosure is implemented.

Embodiments of the present disclosure further provide a computer-readable storage medium, where the computer-readable storage medium stores a computer program, and when the computer program is executed by a processor, the method according to one or more of the embodiments of the present disclosure is implemented.

In the embodiments of the present disclosure, the STA carries the first identification information in the first wireless frame, where the first identification information identifies that after the STA is handed over from the first AP to the second AP, the U-APSD parameter negotiated with the first AP is used on the target link after handover; and, the STA sends the first wireless frame to the first AP, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

### BRIEF DESCRIPTION OF THE DRAWINGS

In order to more clearly illustrate the technical solutions of the embodiments of the present disclosure, the drawings required in the description of the embodiments of the present disclosure will be briefly introduced below. Apparently, the accompanying drawings in the following description are merely some embodiments of the present disclosure, and those of ordinary skill in the art may still derive other drawings from these accompanying drawings without creative efforts.
FIG. 1 is a schematic diagram of a first example of an embodiment of the present disclosure;
FIG. 2 is a first flowchart of U-APSD negotiation according to an embodiment of the present disclosure;
FIG. 3 is a second flowchart of a method for U-APSD negotiation according to an embodiment of the present disclosure;
FIG. 4 is a third flowchart of a method for U-APSD negotiation according to an embodiment of the present disclosure;
FIG. 5 is a first schematic structural diagram of an electronic device according to an embodiment of the present disclosure;
FIG. 6 is a second schematic structural diagram of an electronic device according to an embodiment of the present disclosure;
FIG. 7 is a third schematic structural diagram of an electronic device according to an embodiment of the present disclosure;
FIG. 8 is a second schematic structural diagram of an electronic device according to an embodiment of the present disclosure.

### DETAILED DESCRIPTION

Example embodiments will be described in detail here, examples of which are illustrated in the accompanying drawings. When the following description refers to the accompanying drawings, the same numbers in different drawings represent the same or similar elements unless otherwise indicated. The implementations described in the following example embodiments do not represent all implementations consistent with the present disclosure. On the contrary, they are merely examples of apparatuses and methods consistent with some aspects of the present disclosure as detailed in the appended claims.

In the embodiments of the present disclosure, the terms used here are only for the purpose of describing particular embodiments, and are not intended to be limitations of the present disclosure. As used in the present disclosure and the appended claims, the singular forms "a", "an", and "the" are intended to include the plural forms as well, unless the context clearly indicates otherwise. It should also be understood that the term "and/or" as used here refers to and includes any or all possible combinations of one or more of the associated listed items. For example, A and/or B may indicate three situations that A exists alone, both A and B exist, and B exists alone. The character "/" generally indicates an "or" relationship between associated objects before and after. The term "a plurality of" means two or more; and in view of this, "a plurality of" may also be understood as "at least two" in the embodiments of the present disclosure.

It should be understood that although the terms "first", "second", "third", or the like, may be used in the present disclosure to describe various information, these information should not be limited to these terms. These terms are only used to distinguish the same type of information from each other. For example, without departing from the scope of the present disclosure, the first information may also be referred to as second information, and similarly, the second information may also be referred to as first information. Depending on the context, for example, the word "if" used here may be interpreted as "at the time" or "when" or "in response to determining".

The technical solutions in the embodiments of the present disclosure will be clearly and completely described below with reference to the accompanying drawings in the embodiments of the present disclosure. Obviously, the described embodiments are only a part of the embodiments of the present disclosure, and are not all of the embodiments. All other embodiments obtained by those of ordinary skill in the art based on the embodiments of the present disclosure without creative efforts shall fall within the protection scope of the present disclosure.

Embodiments of the present disclosure provide a method for U-APSD negotiation, an electronic device, and a storage medium, to provide a U-APSD negotiation mechanism.

Among them, the method and the apparatus are based on the same application concept. Since the principles of the method and the apparatus in solving the problem are similar, implementation of the apparatus and the method may be referred to each other, and details are not described herein again.

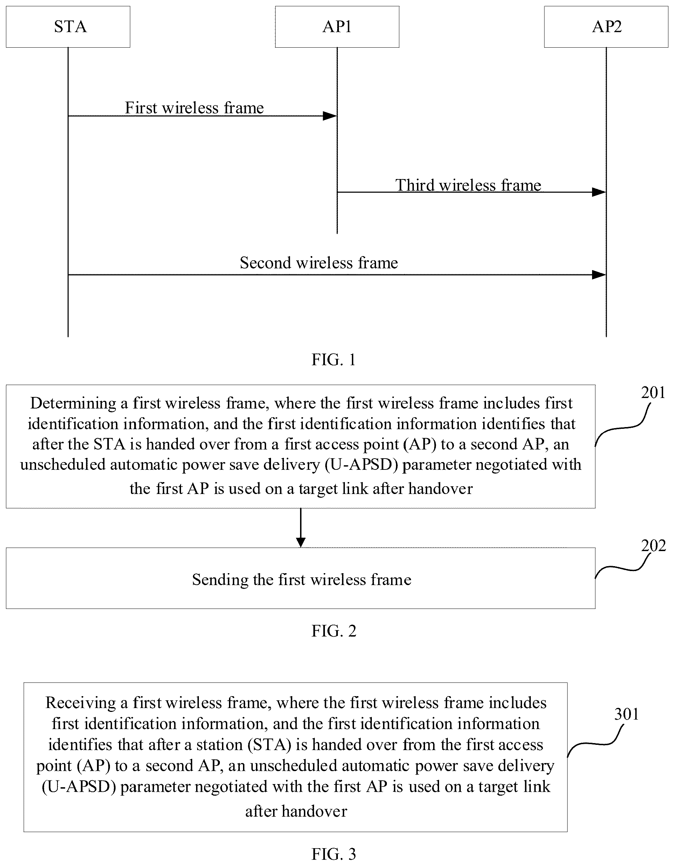

As a first example, FIG. 1 shows an example of an application scenario of a method for U-APSD negotiation according to an embodiment of the present disclosure.

In the UHR, the station (STA) may be handed over between a plurality of access points (APs) or AP MLDs. For example, when the communication quality between the STA and a first AP associated with the STA is poor, the STA may be seamlessly handed over to a second AP for communication, so that the data transmission is continuous.

As shown in FIG. 1, AP1 is the first AP, i.e., the AP that communicates with the STA before handover. The AP1 may not be affiliated with the AP MLD (that is, the AP1 does not support the multi-link communication). In addition, the AP1 may alternatively be affiliated with the AP MLD, which may be understood as that the AP MLD supports multi-link communication.

AP2 is the second AP, i.e., the AP that communicates with the STA after handover. The AP2 may include one or more APs. The AP2 may not be affiliated with the AP MLD (that is, the AP2 does not support the multi-link communication). In addition, the AP2 may alternatively be affiliated with the AP MLD, which may be understood as that the AP MLD supports multi-link communication.

In step 1, the STA determines and sends the first wireless frame to the AP1, where the first wireless frame includes first identification information, and the first identification information identifies that after the STA is handed over from the AP1 to the AP2, an unscheduled automatic power save delivery (U-APSD) parameter negotiated with the AP1 is used on the target link after handover. Among them, when the AP2 is affiliated with the AP MLD, which may be understood as that the AP MLD supports multi-link communication, the U-APSD parameter negotiated with the AP1 may be used under each link, that is, the same U-APSD parameter is used under each link to the AP2.

Optionally, the first wireless frame includes an association request frame or a reassociation request frame. For example, in a multi-link establishment process, the STA sends the first wireless frame to request establishment of an association or a reassociation with an AP MLD1 affiliated by the AP1 and an AP MLD2 affiliated by the AP2, respectively.

In addition, before the STA sends the first wireless frame to the AP1, the STA may receive the parameter information of the AP2 broadcast by the AP1, and establish an initial association with the AP2 based on the parameter information. Optionally, when the AP2 is not affiliated with the AP MLD (that is, the AP2 does not support the multi-link communication), the parameter information may include only the MAC address information of the AP2, or device identification information allocated by the AP1 to the AP2. When the AP2 is affiliated with the AP MLD (which may be understood as that the AP MLD supports multi-link communication), the parameter information may include group identification information of the group to which the AP2 belongs and device identification information of the AP2 in the group, where the group identification information of the group to which the AP2 belongs may be the MAC address information of the AP MLD.

Optionally, the first identification information may indicate a function indicated by the first identification information by using an existing flag bit in the first wireless frame in an implicit indication manner. For example, the first identification information may be represented by using one or more AC U-APSD flag bits in the information elements of QoS capabilities. Specifically, the AC U-APSD flag bit may be, for example, an AC-VO U-APSD flag bit, an AC-VI U-APSD flag bit, an AC-BK U-APSD flag bit, or an AC-BE U-APSD flag bit. If the first wireless frame includes at least one of the above flag bits, the first wireless frame identifies that after the STA is handed over from the AP1 to the AP2, the U-APSD parameter negotiated with the AP1 is used, that is, the content of the U-APSD parameter is used in the target link after handover.

In addition, the U-APSD parameter initially negotiated by the STA with the AP1 is carried in the information elements of QoS capabilities, and the information elements of QoS capabilities may be carried in the first wireless frame.

As an example, the format of the information elements of QoS capabilities is shown in Table 1 below.

**Table 1:**

| | | | |
|---|---|---|---|
| Information content | Element ID | Length | QoS information (QoS info) |

As an example, the format of the U-APSD parameter is shown in Table 2 below.

**Table 2:**

| Bit | B0 | B1 | B2 | B3 | B4 | B5 to B6 | B7 |
|---|---|---|---|---|---|---|---|
| Information content | AC_VO U-APSD Flag | AC_VI U-APSD Flag | AC_BK U-APSD Flag | AC_BE U-APSD Flag | Q-Acknowledge (Q-Ack) | Max SP Length | More Data Acknowledge (More Data Ack) |

Optionally, for the AC-VO U-APSD flag, the AC-VI U-APSD flag, the AC-BK U-APSD flag, and the AC-BE U-APSD flag, a corresponding value may be set at the flag bit of the flag. For example, the flag bit may be set to 1 to identify that the STA may trigger enabled or delivery enabled.

Among them, for the setting of the flag of "Max SP length" in the 5th bit and the 6th bit, reference may be made to Table 3.

**Table 3:**

| B5 | B6 | Usage |
|---|---|---|
| 0 | 0 | The STA is prepared to receive all buffered buffer units (BU). |
| 1 | 0 | The STA is prepared to receive a maximum of two BUs per service period. |
| 0 | 1 | The STA prepares to receive a maximum of four BUs per service period. |
| 1 | 1 | The STA prepares to receive a maximum of six BUs per service period. |

In addition, an explicit indication manner may alternatively be used for the first identification information. For example, a flag bit may be added in the first wireless frame to represent the first identification information. For example, a flag bit may be added in the information element of the *inheritance,* or a flag bit may be added in the information element of the *multi-link element,* to represent the first identification information. Optionally, the information about the AP2 may also be identified in the added flag bit. For example, the information about the AP2 may include the MAC address of the AP MLD affiliated by the AP2, the link ID of the target link established between the STA and the AP2, and the MAC address corresponding to the link ID of the target link established between the STA and the AP2.

In step 2, after receiving the first wireless frame, the AP1 sends a third wireless frame to the AP2, where the third wireless frame includes second identification information, and the second identification information is used to notify the AP2 that after the STA is handed over from the AP1 to the AP2, the U-APSD parameter negotiated with the AP1 is used.

Optionally, the AP1 may send the third wireless frame to the AP2 in a broadcast manner. In addition, the negotiated U-APSD parameter may also be broadcast (for example, the U-APSD parameter may be carried in the third wireless frame), so that the AP2 learns the U-APSD parameter used by the STA after handover.

Optionally, the third wireless frame may be an action frame or a management frame. For example, an action frame or a management frame is added by the AP1, to notify, by using the third wireless frame, the AP2 (AP MLD2) that after the STA is handed over from the AP1 to the AP2, the U-APSD parameter negotiated with the AP1 is used.

In step 3, the AP2 receives the third wireless frame, and learns the U-APSD parameter used by the STA after handover. Thus, a U-APSD negotiation process between the STA and the AP2 is completed.

In step 4, if at least one flag bit in the U-APSD parameter (the flag bit may be for example the AC-VO U-APSD flag bit, the AC-VI U-APSD flag bit, the AC-BK U-APSD flag bit, or the AC-BE U-APSD flag bit) identifies that the STA supports trigger enabled and/or delivery enabled on the target link, the AP2 may buffer the downlink data corresponding to the flag bit. For example, if the AC-VO U-APSD flat bit is set to 1, the AP2 may buffer the AC_VO (voice) data corresponding to the flag bit.

In step 5, after the STA is handed over to the AP2, if at least one flag bit in the U-APSD parameter identifies that the STA supports trigger enabled and/or delivery enabled on the target link, the STA may send the second wireless frame to the AP2 on the target link, to request the AP2 to feed back the buffered downlink data to the STA.

As an example, the second wireless frame may be a PS-Poll (Power Saving) frame. In an actual scenario, after the STA ends sleep, the STA may send the second wireless frame to the AP2, to request the AP2 to feed back the buffered downlink data to the STA.

In the embodiments of the present disclosure, the STA carries the first identification information in the first wireless frame, where the first identification information identifies that after the STA is handed over from the first AP to the second AP, the U-APSD parameter negotiated with the first AP is used on the target link after handover; and, the STA sends the first wireless frame to the first AP, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

As shown in FIG. 2, embodiments of the present disclosure provide a method for U-APSD negotiation. Optionally, the method may be applied to a station (STA), and the method may include the following steps.

In step 201, a first wireless frame is determined, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover.

In step 202, the first wireless frame is sent.

In the UHR, the STA may be handed over between a plurality of APs or AP MLDs. For example, when the communication quality between the STA and the AP associated with the STA is poor, the STA may be seamlessly handed over to another AP for communication, so that the data transmission is continuous. Therefore, it is needed to provide a U-APSD negotiation mechanism, so that after the STA is handed over between a plurality of APs or AP MLDs, the power saving mechanism integrity of the STA is guaranteed.

In the embodiments of the present disclosure, the STA determines the first wireless frame, where the first identification information is carried in the first wireless frame, and the first identification information identifies that after the STA is handed over from the first access point (AP) to the second AP, the U-APSD parameter negotiated with the first AP is used, so that in the scenario that the STA needs to be handed over to the second AP, the second AP may communicate with the STA according to the U-APSD parameter. For example, the second AP may buffer downlink data according to the U-APSD parameter, and feed back the downlink data to the STA after the STA ends sleep.

Among them, the first AP is an AP in communication with the STA before handover, and the first AP may not be affiliated with the AP MLD (that is, the first AP does not support the multi-link communication). In addition, the first AP may alternatively be affiliated with the AP MLD, which may be understood as that the AP MLD supports multi-link communication.

The second AP is an AP in communication with the STA after handover. The second AP may include one or more APs, and the second AP may not be affiliated with the AP MLD (that is, the second AP does not support the multi-link communication). In addition, the second AP may alternatively be affiliated with the AP MLD.

As an example, the identification of the target link may be a Link ID. Optionally, the identification of the link between the STA and the first AP may be the same as or different from the Link ID.

As an example, when the communication quality between the STA and the first AP associated with the STA does not meet the preset communication quality requirement (i.e., the communication quality is poor), the STA may be seamlessly handed over to a second AP for communication, so that the data transmission is continuous. Among them, after the STA is handed over from the first AP to the second AP, the U-APSD parameter negotiated with the first AP is used on the target link established between the STA and the second AP. Optionally, when the second AP is affiliated with the AP MLD, which may be understood as that the AP MLD supports the multi-link communication, under each link, the U-APSD parameter negotiated with the first AP may be used, that is, the same U-APSD parameter is used under each link.

In the embodiments of the present disclosure, the STA carries the first identification information in the first wireless frame, where the first identification information identifies that after the STA is handed over from the first AP to the second AP, the U-APSD parameter negotiated with the first AP is used on the target link after handover; and, the STA sends the first wireless frame to the first AP, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

Optionally, in the embodiments of the present disclosure, the first wireless frame includes an association request frame or a reassociation request frame. For example, in a multi-link establishment process, the STA sends the first wireless frame to request establishment of an association or a reassociation with an AP MLD1 affiliated by the AP1 and an AP MLD2 affiliated by the AP2, respectively.

The STA sends the first wireless frame to the first AP, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

Embodiments of the present disclosure provide a method for U-APSD negotiation, applied to a station (STA). The method includes:
determining a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
sending the first wireless frame.

Among them, the first identification information includes one or more AC U-APSD flags in the information elements of QoS capabilities.

Specifically, the first identification information may indicate a function indicated by the first identification information by using an existing flag bit in the first wireless frame in an implicit indication manner. For example, the first identification information may be represented by using one or more AC U-APSD flag bits in the information elements of QoS capabilities. Specifically, the AC U-APSD flag bit may be, for example, an AC-VO U-APSD flag bit, an AC-VI U-APSD flag bit, an AC-BK U-APSD flag bit, or an AC-BE U-APSD flag bit. If the first wireless frame includes at least one of the above flag bits, the first wireless frame identifies that after the STA is handed over from the AP1 to the AP2, the U-APSD parameter negotiated with the AP1 is used, that is, the content of the U-APSD parameter is used in the target link after handover.

In addition, the U-APSD parameter initially negotiated by the STA with the AP1 is carried in the information elements of QoS capabilities, and the information elements of QoS capabilities may be carried in the first wireless frame.

As an example, the format of the information elements of QoS capabilities is shown in Table 1 above, and details are not described here again.

The format of the negotiated U-APSD parameter (that is, the AC U-APSD flag) is shown in Table 2 above, and details are not described here again.

Optionally, for the AC-VO U-APSD flag, the AC-VI U-APSD flag, the AC-BK U-APSD flag, and the AC-BE U-APSD flag, a corresponding value may be set at the flag bit of the flag. For example, the flag bit may be set to 1 to identify that the STA may trigger enabled or delivery enabled.

Among them, for the setting of the flag of "Max SP length" in the 5th bit and the 6th bit, reference may be made to Table 3 above, and details are not described here again.

Embodiments of the present disclosure provide a method for U-APSD negotiation, applied to a station (STA). The method includes:
determining a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
sending the first wireless frame.

Among them, the first identification information includes a flag bit added in the first wireless frame, and the flag bit is used to identify that an established U-APSD association mechanism is reused after handover from the first AP to the second AP.

Optionally, an explicit indication manner may alternatively be used for the first identification information. For example, a flag bit may be added in the first wireless frame to represent the first identification information, and the added flag bit may be used to identify that the U-APSD association mechanism established between the STA and the first AP may be reused after handover from the first AP to the second AP.

For example, a flag bit may be added in the information element of the *inheritance,* or a flag bit may be added in the information element of the *multi-link element,* to represent the first identification information. Optionally, the information about the AP2 may also be identified in the added flag bit. For example, the information about the AP2 may include the MAC address of the AP MLD affiliated by the AP2, the link ID of the target link established between the STA and the AP2, and the MAC address corresponding to the link ID of the target link established between the STA and the AP2.

Embodiments of the present disclosure provide a method for U-APSD negotiation, applied to a station (STA). The method includes:
determining a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
sending the first wireless frame.

Among them, before determining the first wireless frame, the method includes:
receiving parameter information of the second AP broadcast by the first AP; and
establishing an initial association with the second AP according to the parameter information.

Optionally, before sending the first wireless frame, the STA may establish an initial association with the second AP by using the parameter information of the second AP broadcast by the first AP.

Optionally, the second AP may include one or more APs. Optionally, when the AP2 is not affiliated with the AP MLD (that is, the AP2 does not support the multi-link communication), the parameter information may include only the MAC address information of the AP2, or the device identification information allocated by the AP1 to the AP2.

When the AP2 is affiliated with the AP MLD (which may be understood as that the AP MLD supports the multi-link communication), the parameter information may include group identification information of the group to which the AP2 belongs and device identification information of the AP2 in the group, where the group identification information of the group to which the AP2 belongs may be the MAC address information of the AP MLD.

Embodiments of the present disclosure provide a method for U-APSD negotiation, applied to a station (STA). The method includes:
determining a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
sending the first wireless frame.

Among them, after the sending the first wireless frame, the method further includes:
sending a second wireless frame to the second AP on the target link, where the U-APSD parameter identifies that the STA supports trigger enabled and/or delivery enabled on the target link, and the second wireless frame requests the second AP to feed back the buffered downlink data to the STA.

Specifically, after the STA is handed over to the second AP, if at least one flag bit in the U-APSD parameter identifies that the STA supports trigger enabled and/or delivery enabled on the target link, the STA may send the second wireless frame to the second AP on the target link, to request the second AP to feed back the buffered downlink data to the STA.

As an example, the second wireless frame may be a PS-Poll (Power Saving) frame. In an actual scenario, after the STA ends sleep, the STA may send the second wireless frame to the second AP, to request the second AP to feed back the buffered downlink data to the STA.

In the embodiments of the present disclosure, the STA carries the first identification information in the first wireless frame, where the first identification information identifies that after the STA is handed over from the first AP to the second AP, the U-APSD parameter negotiated with the first AP is used on the target link after handover; and, the STA sends the first wireless frame to the first AP, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

Embodiments of the present disclosure provide a method for U-APSD negotiation. Optionally, the method may be applied to a station (STA), and the method may include the following steps:
determining a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
sending the first wireless frame.

Optionally, the first identification information includes one or more AC U-APSD flags in the information elements of QoS capabilities.

Optionally, the first identification information includes a flag bit added in the first wireless frame, and the flag bit is used to identify that an established U-APSD association mechanism is reused after handover from the first AP to the second AP.

Optionally, before determining a first wireless frame, the method includes:
receiving parameter information of the second AP broadcast by the first AP; and
establishing an initial association with the second AP according to the parameter information.

Optionally, after sending the first wireless frame, the method further includes:
sending a second wireless frame to the second AP on the target link, where the U-APSD parameter identifies that the STA supports trigger enabled and/or delivery enabled on the target link, and the second wireless frame requests the second AP to feed back the buffered downlink data to the STA.

Optionally, the first wireless frame includes an association request frame or a reassociation request frame.

Referring to FIG. 3, embodiments of the present disclosure provide a method for U-APSD negotiation. Optionally, the method may be applied to a first access point (AP). Optionally, in the embodiments of the present disclosure, the AP, for example, may be a device having a wireless to wired bridging function, and the AP is responsible for extending a service provided by a wired network to a wireless network. A station (STA), for example, may be an electronic device having a wireless network access function, and the STA provides a frame delivery service to enable the information to be delivered.

In step 301, a first wireless frame is received, where the first wireless frame includes first identification information, and the first identification information identifies that after a station (STA) is handed over from the first access point (AP) to a second AP, an unscheduled automatic power save delivery (U-APSD) parameter negotiated with the first AP is used on a target link after handover.

Among them, the first AP is an AP in communication with the STA before handover, and the first AP may not be affiliated with the AP MLD (that is, the first AP does not support the multi-link communication). In addition, the first AP may alternatively be affiliated with the AP MLD, which may be understood as that the AP MLD supports the multi-link communication.

The second AP is an AP in communication with the STA after handover. The second AP may include one or more second APs, and the second AP may not be affiliated with the AP MLD (that is, the second AP does not support the multi-link communication). In addition, the second AP may alternatively be affiliated with the AP MLD.

As an example, the identification of the target link may be a Link ID. Optionally, the identification of the link between the STA and the first AP may be the same as or different from the Link ID.

As an example, when the communication quality between the STA and the first AP associated with the STA does not meet the preset communication quality requirement (i.e., the communication quality is poor), the STA may be seamlessly handed over to a second AP for communication, so that the data transmission is continuous. Among them, after the STA is handed over from the first AP to the second AP, the U-APSD parameter negotiated with the first AP is used on the target link established between the STA and the second AP. Optionally, when the second AP is affiliated with the AP MLD, which may be understood as that the AP MLD supports the multi-link communication, under each link, the U-APSD parameter negotiated with the first AP may be used, that is, the same U-APSD parameter is used under each link.

In the embodiments of the present disclosure, the first AP receives the first wireless frame , where the first wireless frame carries the first identification information, and the first identification information identifies that after the STA is handed over from the first AP to the second AP, the U-APSD parameter negotiated with the first AP is used on the target link after handover, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

Optionally, in the embodiments of the present disclosure, the first wireless frame includes an association request frame or a reassociation request frame. For example, in a multi-link establishment process, the STA sends the first wireless frame to request establishment of an association or a reassociation with an AP MLD1 affiliated by the AP1 and an AP MLD2 affiliated by the AP2, respectively.

The first AP receives the first wireless frame, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

Embodiments of the present disclosure provide a method for U-APSD negotiation, applied to a first AP. The method includes:
receiving a first wireless frame, where the first wireless frame includes first identification information, and the first identification information identifies that after the STA is handed over from the first access point (AP) to a secondAP, an unscheduled automatic power save delivery (U-APSD) parameter negotiated with the first AP is used on a target link after handover.

Among them, the first identification information includes one or more AC U-APSD flags in the information elements of QoS capabilities.

Specifically, the first identification information may indicate a function indicated by the first identification information by using an existing flag bit in the first wireless frame in an implicit indication manner. For example, the first identification information may be represented by using one or more AC U-APSD flag bits in the information elements of QoS capabilities. Specifically, the AC U-APSD flag bit may be, for example, an AC-VO U-APSD flag bit, an AC-VI U-APSD flag bit, an AC-BK U-APSD flag bit, or an AC-BE U-APSD flag bit. If the first wireless frame includes at least one of the above flag bits, the first wireless frame identifies that after the STA is handed over from the AP1 to the AP2, the U-APSD parameter negotiated with the AP1 is used, that is, the content of the U-APSD parameter is used in the target link after handover.

In addition, the U-APSD parameter initially negotiated by the initial STA with the AP1 is carried in the information elements of QoS capabilities, and the information elements of QoS capabilities may be carried in the first wireless frame.

As an example, the format of the information elements of QoS capabilities is shown in Table 1 above, and details are not described here again.

The format of the negotiated U-APSD parameter (that is, the AC U-APSD flag) is shown in Table 2 above, and details are not described here again.

Optionally, for the AC-VO U-APSD flag, the AC-VI U-APSD flag, the AC-BK U-APSD flag, and the AC-BE U-APSD flag, a corresponding value may be set at the flag bit of the flag. For example, the flag bit may be set to 1 to identify that the STA may trigger enabled or delivery enabled.

Among them, for the setting of the flag of "Max SP length" in the 5th bit and the 6th bit, reference may be made to Table 3 above, and details are not described here again.

Embodiments of the present disclosure provide a method for U-APSD negotiation, applied to a first AP. The method includes:
receiving a first wireless frame, where the first wireless frame includes first identification information, and the first identification information identifies that after the station (STA) is handed over from the first access point (AP) to a second AP, an unscheduled automatic power save delivery (U-APSD) parameter negotiated with the first AP is used on a target link after handover.

Among them, the first identification information includes a flag bit added in the first wireless frame, and the flag bit is used to identify that an established U-APSD association mechanism is reused after handover from the first AP to the second AP.

Optionally, an explicit indication manner may alternatively be used for the first identification information. For example, a flag bit may be added in the first wireless frame to represent the first identification information, and the added flag bit may be used to identify that the U-APSD association mechanism established between the STA and the first AP may be reused after handover from the first AP to the second AP.

For example, a flag bit may be added in the information element of the *inheritance,* or a flag bit may be added in the information element of the *multi-link element,* to represent the first identification information. Optionally, the information about the AP2 may also be identified in the added flag bit. For example, the information about the AP2 may include the MAC address of the AP MLD affiliated by the AP2, the link ID of the target link established between the STA and the AP2, and the MAC address corresponding to the link ID of the target link established between the STA and the AP2.

Optionally, in the embodiments of the present disclosure, the method includes:
forwarding U-APSD mechanism information negotiated with the STA to the second AP.

Specifically, the format of the negotiated U-APSD mechanism information (that is, the U-APSD parameter, for example, the AC U-APSD flag) is shown in Table 2 above, and details are not described here again.

Optionally, for the AC-VO U-APSD flag, the AC-VI U-APSD flag, the AC-BK U-APSD flag, and the AC-BE U-APSD flag, a corresponding value may be set at the flag bit of the flag. For example, the flag bit may be set to 1 to identify that the STA may trigger enabled or delivery enabled.

Embodiments of the present disclosure provide a method for U-APSD negotiation, applied to a first AP. The method includes:
receiving a first wireless frame, where the first wireless frame includes first identification information, and the first identification information identifies that after the STA is handed over from the first access point (AP) to a second AP, an unscheduled automatic power save delivery (U-APSD) parameter negotiated with the first AP is used on a target link after handover.

Before receiving the first wireless frame, the method includes:
broadcasting parameter information of the second AP;
where the parameter information is used by the STA to establish an initial association with the second AP.

Optionally, before sending the first wireless frame, the STA may establish an initial association with the second AP by using the parameter information of the second AP broadcast by the first AP.

Optionally, the second AP may include one or more Aps. Optionally, when the AP2 is not affiliated with the AP MLD (that is, the AP2 does not support the multi-link communication), the parameter information may include only the MAC address information of the AP2, or the device identification information allocated by the AP1 to the AP2.

When the AP2 is affiliated with the AP MLD (which may be understood as that the AP MLD supports the multi-link communication), the parameter information may include group identification information of the group to which the AP2 belongs and device identification information of the AP2 in the group, where the group identification information of the group to which the AP2 belongs may be the MAC address information of the AP MLD.

Embodiments of the present disclosure provide a method for U-APSD negotiation, applied to a first AP. The method includes:
receiving a first wireless frame, where the first wireless frame includes first identification information, and the first identification information identifies that after the station (STA) is handed over from a first access point (AP) to a second AP, an unscheduled automatic power save delivery (U-APSD) parameter negotiated with the first AP is used on a target link after handover.

After receiving the first wireless frame, the method includes:
sending a third wireless frame to the second AP, where the third wireless frame includes second identification information, and the second identification information identifies that after the STA is handed over from the first AP to the second AP, the U-APSD parameter negotiated with the first AP is used on the target link after handover.

Optionally, the third wireless frame may be an action frame or a management frame. For example, an action frame or a management frame is added by the AP1, to notify, by using the third wireless frame, the AP2 (AP MLD2) that after the STA is handed over from the AP1 to the AP2, the U-APSD parameter negotiated with the AP1 is used.

Optionally, the AP1 may send the third wireless frame to the AP2 in a broadcast manner. In addition, the negotiated U-APSD parameter may also be broadcast (for example, the U-APSD parameter may be carried in the third wireless frame), so that the AP2 learns the U-APSD parameter used by the STA after handover.

In the embodiments of the present disclosure, the first AP receives the first wireless frame, where the first wireless frame carries the first identification information, and the first identification information identifies that after the STA is handed over from the first AP to the second AP, the U-APSD parameter negotiated with the first AP is used on the target link after handover, so that the first AP forwards the information identified by the first identification information to the second AP. In this way, after the STA is handed over to the second AP due to the change of the communication status between the STA and the first AP associated with the STA, the second AP may perform the buffer function according to the U-APSD parameter, to ensure the power saving mechanism integrity of the STA.

Embodiments of the present disclosure provide a method for U-APSD negotiation, applied to a first AP. The method includes:
receiving a first wireless frame, where the first wireless frame includes first identification information, and the first identification information identifies that after the STA is handed over from the first access point (AP) to a second AP, an unscheduled automatic power save delivery (U-APSD) parameter negotiated with the first AP is used on a target link after handover.

Optionally, the first identification information includes one or more AC U-APSD flags in the information elements of QoS capabilities.

Optionally, the first identification information includes a flag bit added in the first wireless frame, and the flag bit is used to identify that an established U-APSD association mechanism is reused after handover from the first AP to the second AP.

Optionally, the U-APSD mechanism information negotiated with the STA is forwarded to the second AP.

Optionally, before receiving the first wireless frame, the method includes:
broadcasting parameter information of the second AP;
where the parameter information is used by the STA to establish an initial association with the second AP.

Optionally, after receiving the first wireless frame, the method includes:
sending a third wireless frame to the second AP, where the third wireless frame includes second identification information and the second identification information identifies that after the STA is handed over from the first AP to the second AP, the U-APSD parameter negotiated with the first AP is used on the target link after handover.

Optionally, the first wireless frame includes an association request frame or a reassociation request frame.

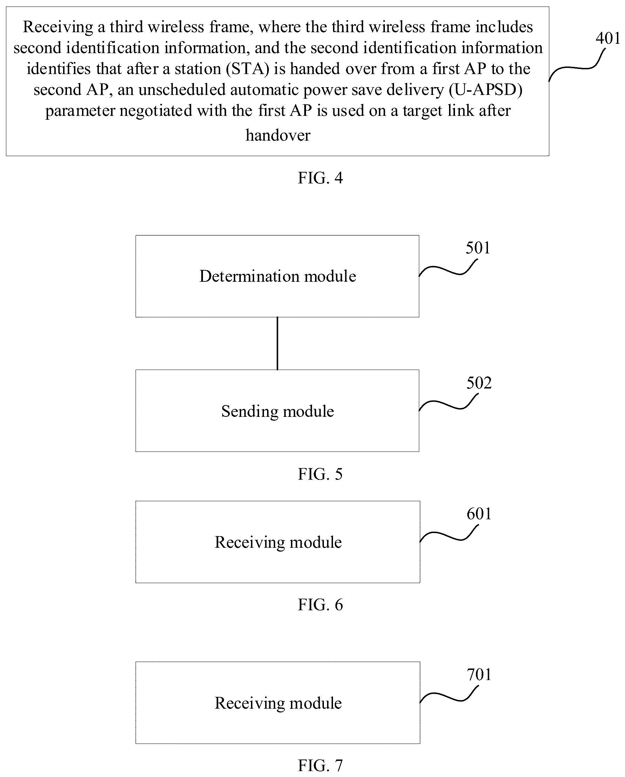

Referring to FIG. 4, embodiments of the present disclosure provides a method for U-APSD negotiation. Optionally, the method may be applied to a second AP, and the method may include the following steps.

In step 401, a third wireless frame is received, where the third wireless frame includes second identification information, and the second identification information identifies that after the station (STA) is handed over from a first AP to the second AP, the U-APSD parameter negotiated with the first AP is used on the target link after handover.

Among them, the first AP is an AP in communication with the STA before handover, and the first AP may not be affiliated with the AP MLD (that is, the first AP does not support the multi-link communication). In addition, the first AP may alternatively be affiliated with the AP MLD, which may be understood as that the AP MLD supports the multi-link communication.

The second AP is an AP in communication with the STA after handover. The second AP may include one or more second APs, and the second AP may not be affiliated with the AP MLD (that is, the second AP does not support the multi-link communication). In addition, the second AP may alternatively be affiliated with the AP MLD.

As an example, the identification of the target link may be a Link ID. Optionally, the identification of the link between the STA and the first AP may be the same as or different from the Link ID.

As an example, when the communication quality between the STA and the first AP associated with the STA does not meet the preset communication quality requirement (i.e., the communication quality is poor), the STA may be seamlessly handed over to a second AP for communication, so that the data transmission is continuous. Among them, after the STA is handed over from the first AP to the second AP, the U-APSD parameter negotiated with the first AP is used on the target link established between the STA and the second AP. Optionally, when the second AP is affiliated with the AP MLD, which may be understood as that the AP MLD supports the multi-link communication, under each link, the U-APSD parameter negotiated with the first AP may be used, that is, the same U-APSD parameter is used under each link.

In the embodiments of the present disclosure, the second AP receives a third wireless frame, where the third wireless frame carries second identification information, the second identification information identifies that after the STA is handed over from the first AP to the second AP, the U-APSD parameter negotiated with the first AP is used on the target link after handover. After the STA is handed over to the second AP due to the change of the communication status between the STA and the first AP associated with the STA, the second AP may perform the buffer function according to the U-APSD parameter, to ensure the power saving mechanism integrity of the STA.

Optionally, in the embodiments of the present disclosure, the method includes:
receiving U-APSD mechanism information negotiated by the STA with the first AP.

Specifically, the format of the negotiated U-APSD mechanism information (that is, the U-APSD parameter, for example, the AC U-APSD flag) is shown in Table 2 above, and details are not described here again.

Optionally, for the AC-VO U-APSD flag, the AC-VI U-APSD flag, the AC-BK U-APSD flag, and the AC-BE U-APSD flag, a corresponding value may be set at the flag bit of the flag. For example, the flag bit may be set to 1 to identify that the STA may trigger enabled or delivery enabled.

Embodiments of the present disclosure provide a method for U-APSD negotiation, applied to a second AP. The method includes:
receiving a third wireless frame, where the third wireless frame includes second identification information, and the second identification information identifies that after the station (STA) is handed over from a first access point (AP) to the second AP, an unscheduled automatic power save delivery (U-APSD) parameter negotiated with the first AP is used on a target link after handover.

Optionally, the third wireless frame may be an action frame or a management frame. For example, an action frame or a management frame is added by the AP1, to notify, by using the third wireless frame, the AP2 (AP MLD2) that after the STA is handed over from the AP1 to the AP2, the U-APSD parameter negotiated with the AP1 is used.

Among them, the U-APSD parameter identifies that the station supports trigger enabled and/or delivery enabled on the target link. The second AP receives a second wireless frame sent by the STA on the target link, and feeds back the buffered downlink data to the STA.

As an example, if at least one flag bit in the U-APSD parameters (the flag bit may be, for example, the AC-VO U-APSD flag bit, the AC-VI U-APSD flag bit, the AC-BK U-APSD flag bit, or the AC-BE U-APSD flag bit) identifies that the STA supports trigger enabled and/or delivery enabled on the target link, the AP2 may buffer the downlink data corresponding to the flag bit. For example, if the AC-VO U-APSD flat bit is set to 1, the AP2 may buffer the AC_VO (voice) data corresponding to the flag bit. When receiving the second wireless frame sent by the STA, the AP2 may feed back the buffered downlink data to the STA.

Embodiments of the present disclosure provide a method for U-APSD negotiation, applied to a second AP. The method includes:
receiving a third wireless frame, where the third wireless frame includes second identification information, and the second identification information identifies that after the station (STA) is handed over from a first access point (AP) to the second AP, an unscheduled automatic power save delivery (U-APSD) parameter negotiated with the first AP is used on a target link after handover.

Optionally, the U-APSD mechanism information negotiated by the STA with the first AP is received.

Optionally, the U-APSD parameter identifies that the station supports trigger enabled and/or delivery enabled on the target link. The second AP receives a second wireless frame sent by the STA on the target link, and feeds back the buffered downlink data to the STA.

Referring to FIG. 5, based on the same principle as the method provided in the embodiments of the present disclosure, embodiments of the present disclosure further provide an electronic device, where the electronic device is a station (STA), and the electronic device includes:
a determination module 501, configured to determine a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
a sending module 502, configured to send the first wireless frame.

Embodiments of the present disclosure further provide an apparatus for U-APSD negotiation, applied to a station (STA). The apparatus includes:
a wireless frame determination module, configured to determine a first wireless frame, where the first wireless frame includes first identification information, and the first identification information identifies that after the STA is handed over from a first access point (AP) to a second AP, an unscheduled automatic power save delivery (U-APSD) parameter negotiated with the first AP is used on a target link after handover; and
a wireless frame sending module, configured to send the first wireless frame.

The apparatus further includes other modules of the electronic device in the foregoing embodiments, and details are not described here again.

Referring to FIG. 6, based on the same principle as the method provided in the embodiments of the present disclosure, embodiments of the present disclosure further provide an electronic device, where the electronic device is a first access point (AP), and the electronic device includes a receiving module 601.

The receiving module 601 is configured to receive a first wireless frame, where the first wireless frame includes first identification information, and the first identification information identifies that after the STA is handed over from the first access point (AP) to a second AP, an unscheduled automatic power save delivery (U-APSD) parameter negotiated with the first AP is used on a target link after handover.

Embodiments of the present disclosure further provide an apparatus for U-APSD negotiation, applied to a first access point (AP), and the apparatus includes a wireless frame receiving module.

The wireless frame receiving module, configured to receive a first wireless frame, where the first wireless frame includes first identification information, and the first identification information identifies that after the STA is handed over from the first access point (AP) to a second AP, an unscheduled automatic power save delivery (U-APSD) parameter negotiated with the first AP is used on a target link after handover.

The apparatus further includes other modules of the electronic device in the foregoing embodiments, and details are not described here again.

Referring to FIG. 7, based on the same principle as the method provided in the embodiments of the present disclosure, embodiments of the present disclosure further provide an electronic device, where the electronic device is a second access point (AP), and the electronic device includes a receiving module 701.

The receiving module 701 is configured to receive a third wireless frame, where the third wireless frame includes second identification information, and the second identification information identifies that after the station (STA) is handed over from a first access point (AP) to the second AP, an unscheduled automatic power save delivery (U-APSD) parameter negotiated with the first AP is used on a target link after handover.

Embodiments of the present disclosure further provide an apparatus for U-APSD negotiation, applied to a second access point (AP), where the apparatus includes a wireless frame receiving module.

The wireless frame receiving module is configured to receive a third wireless frame, where the third wireless frame includes second identification information, and the second identification information identifies that after the station (STA) is handed over from a first access point (AP) to the second AP, an unscheduled automatic power save delivery (U-APSD) parameter negotiated with the first AP is used on a target link after handover.

The apparatus further includes other modules of the electronic device in the foregoing embodiments, and details are not described here again.

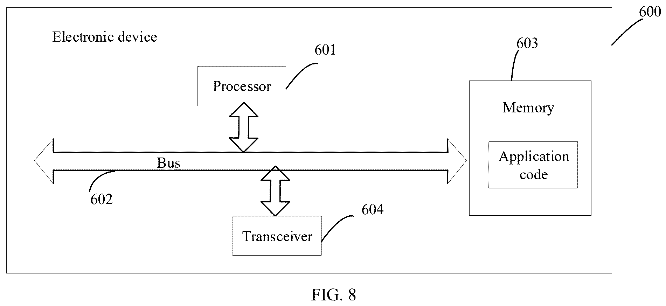

In an optional embodiment, embodiments of the present disclosure further provide an electronic device as shown in FIG. 8. The electronic device 600 shown in FIG. 8 may be a server including a processor 601 and a memory 603, where the processor 601 is connected to the memory 603, for example, they are connected by a bus 602. Optionally, the electronic device 600 may further include a transceiver 604. It should be noted that, in the actual application, it is not limited that there is only one transceiver 604. The structure of the electronic device 600 does not constitute a limitation on the embodiments of the present disclosure.

The processor 601 may be a central processing unit (CPU), a general-purpose processor, a digital signal processor (DSP), an application specific integrated circuit (ASIC), a field programmable gate array (FPGA) or another programmable logic device, a transistor logic device, a hardware component, or any combination of the above. The processor 601 may implement or execute various example logical blocks, modules, and circuits described with reference to the content disclosed in the present disclosure. The processor 601 may also be a combination for implementing computing functions, for example, including a combination of one or more microprocessors, a combination of a DSP and a microprocessor, etc.

The bus 602 may include a path for transmitting information between the above components. The bus 602 may be a peripheral component interconnect (PCI) bus or an extended industry standard architecture (EISA) bus, or the like. The bus 602 may be classified into an address bus, a data bus, a control bus, etc. For ease of representation, only one thick line is used in FIG. 8, but it does not mean that there is only one bus or one type of bus.

The memory 603 may be a read-only memory (ROM) or another type of static storage device that can store static information and instructions, a random access memory (RAM) or another type of dynamic storage device that can store information and instructions; or the memory 603 may be an electrically erasable programmable read-only memory (EEPROM), a compact disk read-only memory (CD-ROM) or other optical disc storage, an optical disk storage (including a compact disk, a laser disk, an optical disk, a digital versatile disk, a Bluray disk, etc.), a magnetic disk storage medium or other magnetic storage devices, or any other medium that can be used to carry or store desired program code in the form of instructions or data structures and can be accessed by a computer, which is not limited to this.

The memory 603 is used to store application code executing the solution of the present disclosure, and is controlled by the processor 601. The processor 601 is configured to execute the application code stored in the memory 603 to implement the content shown in the foregoing method embodiments.

Among them, the electronic device includes but is not limited to a mobile terminal such as a mobile phone, a notebook computer, a digital broadcast receiver, a PDA (personal digital assistant), a PAD (tablet computer), a PMP (portable multimedia player), a vehicle-mounted terminal (for example, a vehicle-mounted navigation terminal), and a fixed terminal such as a digital TV or a desktop computer. The electronic device shown in FIG. 8 is merely an example, and should not bring any limitation to the function and scope of use of the embodiments of the present disclosure.

The server provided in the present disclosure may be an independent physical server, or may be a server cluster or a distributed system composed of a plurality of physical servers, or may be a cloud server that provides basic cloud computing services such as cloud services, cloud databases, cloud computing, cloud functions, cloud storage, network services, cloud communications, middleware services, domain name services, security services, CDNs, and big data and artificial intelligence platforms. The terminal may be a smartphone, a tablet computer, a notebook computer, a desktop computer, a smart speaker, a smart watch, or the like, but is not limited to this. The terminal and the server may be directly or indirectly connected in a wired or wireless communication manner, which is not limited in the present disclosure.

Embodiments of the present disclosure provide a computer-readable storage medium, where the computer-readable storage medium stores a computer program, and when the computer program is run on a computer, the computer may perform corresponding content in the foregoing method embodiments.

It should be understood that, although the steps in the flowcharts of the drawings are sequentially displayed according to the indication of the arrows, these steps are not necessarily performed in sequence according to the order indicated by the arrows. Unless explicitly stated here, the execution of these steps is not strictly limited, and may be performed in other orders. Moreover, at least some of the steps in the flowcharts of the accompanying drawings may include a plurality of sub-steps or a plurality of stages. These sub-steps or stages are not necessarily performed at the same moment, but may be executed at different moments; and the execution order of the sub-steps or stages is not necessarily performed in sequence, but may be performed with at least some of other steps or the sub-steps or stages of other steps alternately or by taking turns.

It should be noted that the computer-readable medium described above in the present disclosure may be a computer-readable signal medium or a computer-readable storage medium or any combination of the two. The computer-readable storage medium may be, for example, but is not limited to, an electronic, magnetic, optical, electromagnetic, infrared, or semiconductor system, apparatus, or device, or any combination of the above. More specific examples of the computer-readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program, and the program may be used by or in combination with an instruction execution system, apparatus, or device. In the present disclosure, the computer-readable signal medium may include a data signal propagated in a baseband or as part of a carrier wave, which carries computer-readable program code. Such propagated data signals may take a variety of forms, including, but not limited to, electromagnetic signals, optical signals, or any suitable combination of the foregoing. The computer-readable signal medium may also be any computer-readable medium other than a computer-readable storage medium, and the computer-readable signal medium may send, propagate, or transmit a program for use by or in connection with an instruction execution system, apparatus, or device. The program code included on the computer-readable medium may be transmitted by using any appropriate medium, including but not limited to, a wire, an optical cable, an RF (radio frequency), or any suitable combination of the foregoing, etc.

The computer-readable medium may be included in the electronic device, or may exist alone without being assembled into the electronic device.

The computer-readable medium carries one or more programs, and when the one or more programs are executed by the electronic device, the electronic device is enabled to perform the method shown in the foregoing embodiments.

According to an aspect of the present disclosure, there is provided a computer program product or a computer program. The computer program product or the computer program includes a computer instruction, and the computer instruction is stored in a computer-readable storage medium. A processor of a computer device reads the computer instruction from the computer-readable storage medium, and the processor executes the computer instruction, so that the computer device performs the method provided in the foregoing optional implementations.

Computer program code for executing the operations of the present disclosure may be written in one or more programming languages or a combination of them. The programming language includes an object oriented programming language, such as Java, Smalltalk, C++, and further includes conventional procedural programming languages, such as the "C" language or similar programming languages. The program code may be executed entirely on the user's computer, partly on the user computer, as a stand-alone software package, partly on the user's computer and partly on a remote computer, or entirely on the remote computer or server. In the case of involving a remote computer, the remote computer may be connected to the user computer through any kind of network, including a local area network (LAN) or a wide area network (WAN), or may be connected to an external computer (e.g., being connected by the Internet via an Internet service provider).

The flowchart and block diagrams in the drawings illustrate the architecture, functionality, and operation of possible implementations of systems, methods, and computer program products according to various embodiments of the present disclosure. In this regard, each block in the flowchart or block diagram may represent a module, program segment, or portion of code, which includes one or more executable instructions for implementing the specified logical function. It should also be noted that, in some alternative implementations, the functions noted in the blocks may occur is an order different from the order noted in the drawings. For example, two blocks shown in succession may, in fact, be executed substantially in parallel, or they may sometimes be executed in the reverse order, which depends upon the functionality involved. It should also be noted that each block in the block diagram and/or flowchart, and combinations of blocks in the block diagram and/or flowchart, may be implemented by a dedicated hardware-based system that performs specified functions or operations, or may be implemented by a combination of dedicated hardware and computer instructions.

The involved modules described in the embodiments of the present disclosure may be implemented by software or hardware. Among them, the name of the module does not constitute a limitation on the module itself in a certain case. For example, the A module may also be described as "A module for performing the B operation".

The above description only includes preferred embodiments of the present disclosure and an illustration of the applied technical principles. It should be understood by those skilled in the art that the scope of the present disclosure involved in the present disclosure is not limited to the technical solutions formed by the specific combination of the above technical features, and should also cover, without departing from the above disclosed concept, other technical solutions formed by any combination of the above technical features or their equivalent features, such as technical solutions formed by replacing the above-mentioned features with (but not limited to) technical features with similar functions disclosed in the present disclosure.

## Claims

1. A method for U-APSD negotiation, applied to a station, STA, wherein the method comprises:
determining a first wireless frame, wherein the first wireless frame comprises first identification information, and the first identification information identifies that after the STA is handed over from a first access point, AP, to a second AP, an unscheduled automatic power save delivery, U-APSD, parameter negotiated with the first AP is used on a target link after handover; and
sending the first wireless frame.

2. The method for U-APSD negotiation according to claim 1, wherein,
the first identification information comprises one or more AC U-APSD flags in information elements of QoS capabilities.

3. The method for U-APSD negotiation according to claim 1, wherein,
the first identification information comprises a flag bit added in the first wireless frame, and the flag bit is used to identify that an established U-APSD association mechanism is reused after handover from the first AP to the second AP.

4. The method for U-APSD negotiation according to any one of claims 1 to 3, wherein before determining the first wireless frame, the method comprises:
receiving parameter information of the second AP broadcast by the first AP; and
establishing an initial association with the second AP according to the parameter information.

5. The method for U-APSD negotiation according to claim 1 or 2, wherein after sending the first wireless frame, the method further comprises:
sending a second wireless frame to the second AP on the target link, wherein the U-APSD parameter identifies that the STA supports trigger enabled and/or delivery enabled on the target link, and the second wireless frame requests the second AP to feed back buffered downlink data to the STA.

6. A method for U-APSD negotiation, applied to a first access point, AP, wherein the method comprises:
receiving a first wireless frame, wherein the first wireless frame comprises first identification information, and the first identification information identifies that after a station, STA is handed over from the first access point, AP, to a second AP, an unscheduled automatic power save delivery, U-APSD, parameter negotiated with the first AP is used on a target link after handover.

7. The method for U-APSD negotiation according to claim 6, wherein,
the first identification information comprises one or more AC U-APSD flags in information elements of QoS capabilities.

8. The method for U-APSD negotiation according to claim 6, wherein,
the first identification information comprises a flag bit added in the first wireless frame, and the flag bit is used to identify that an established U-APSD association mechanism is reused after handover from the first AP to the second AP.

9. The method for U-APSD negotiation according to claim 8, wherein the method comprises:
forwarding U-APSD mechanism information negotiated with the STA to the second AP.

10. The method for U-APSD negotiation according to any one of claims 6 to 9, wherein before receiving the first wireless frame, the method comprises:
broadcasting parameter information of the second AP;
wherein the parameter information is used by the STA to establish an initial association with the second AP.

11. The method for U-APSD negotiation according to any one of claims 6 to 9, wherein after receiving the first wireless frame, the method comprises:
sending a third wireless frame to the second AP, wherein the third wireless frame comprises second identification information, and the second identification information identifies that after the STA is handed over from the first AP to the second AP, the U-APSD parameter negotiated with the first AP is used on the target link after handover.

12. A method for U-APSD negotiation, applied to a second access point, AP, wherein the method comprises:
receiving a third wireless frame, wherein the third wireless frame comprises second identification information, and the second identification information identifies that after a station, STA, is handed over from a first AP to the second AP, an unscheduled automatic power save delivery, U-APSD, parameter negotiated with the first AP is used on a target link after handover.

13. The method for U-APSD negotiation according to claim 12, further comprising:
receiving U-APSD mechanism information negotiated by the STA with the first AP.

14. The method for U-APSD negotiation according to claim 12, further comprising:
receiving a second wireless frame sent by the STA on the target link, and feeding back buffered downlink data to the STA, wherein the U-APSD parameter identifies that the STA supports trigger enabled and/or delivery enabled on the target link.

15. An electronic device, wherein the electronic device is a station, STA, and the electronic device comprises:
a determination module, configured to determine a first wireless frame, wherein the first wireless frame comprises first identification information, and the first identification information identifies that after the STA is handed over from a first access point, AP, to a second AP, an unscheduled automatic power save delivery, U-APSD, parameter negotiated with the first AP is used on a target link after handover; and
a sending module, configured to send the first wireless frame.

16. An electronic device, wherein the electronic device is a first access point, AP, and the electronic device comprises:
a receiving module, configured to receive a first wireless frame, wherein the first wireless frame comprises first identification information, and the first identification information identifies that after a station, STA, is handed over from the first access point, AP, to a second AP, an unscheduled automatic power save delivery, U-APSD, parameter negotiated with the first AP is used on a target link after handover.

17. An electronic device, wherein the electronic device is a second access point, AP, and the electronic device comprises:
a receiving module, configured to receive a third wireless frame, wherein the third wireless frame comprises second identification information, and the second identification information identifies that after a station, STA, is handed over from a first AP to the second AP, an unscheduled automatic power save delivery, U-APSD, parameter negotiated with the first AP is used on a target link after handover.

18. An electronic device, comprising a memory, a processor, and a computer program stored in the memory and executable on the processor, wherein when the processor executes the program, the method according to any one of claims 1 to 5 is implemented, or the method according to any one of claims 6 to 11 is implemented, or the method according to any one of claims 12 to 14 is implemented.

19. A computer-readable storage medium, wherein a computer program is stored on the computer-readable storage medium, and when the computer program is executed by a processor, the method according to any one of claims 1 to 5 is implemented, or the method according to any one of claims 6 to 11 is implemented, or the method according to any one of claims 12 to 14 is implemented.
